# EUROPÄISCHE PATENTSCHRIFT

(11) **EP 1 407 227 B1**
(45) Veröffentlichungstag und Bekanntmachung des Hinweises auf die Patenterteilung: **29.10.2008**
(21) Anmeldenummer: 02732315.3
(22) Anmeldetag: 20.06.2002
(51) Int. Cl.: G01C 15/00

(54) **ENTFERNUNGSMESSGERÄT MIT VISIEREINRICHTUNG**
RANGE FINDER WITH SIGHTING DEVICE
TELEMETRE COMPORTANT UN VISEUR

(30) Priorität: 17.07.2001 CH 13152001
(43) Veröffentlichungstag der Anmeldung: 14.04.2004
(73) Patentinhaber: Leica Geosystems AG, 9435 Heerbrugg (CH)
(72) Erfinder: GIGER, Kurt, CH-9464 Rüthi (CH)
(74) Vertreter: Hasler, Erich
(86) Internationale Anmeldenummer: PCT/CH2002/000335
(87) Internationale Veröffentlichungsnummer: WO 2003/008909

(56) Entgegenhaltungen:
- EP-A- 0 481 278
- EP-A- 0 661 519
- EP-A- 1 008 831
- WO-A-00/25089
- DE-A- 19 922 321
- JP-A- 8 021 878

## Beschreibung

Die Erfindung betrifft ein Entfernungsmessgerät mit Visiereinrichtung gemäss dem Oberbegriff des Patentanspruchs 1. Die Erfindung betrifft auch ein Verfahren zur Detektion eines Messpunktes an einem Messobjekt, dessen Entfernung bestimmt werden soll.

Entfernungsmessgeräte der gattungsgemässen Art sind aus dem Stand der Technik hinlänglich bekannt. Sie weisen einen Entfernungsmessbereich von einigen zehn Metern auf und sind oftmals als Handgeräte ausgebildet. Sie werden hauptsächlich in der Bauvermessung oder im Innenausbau, beispielsweise zum dreidimensionalen Vermessen von Räumen, eingesetzt. Weitere Anwendungsbereiche für Entfernungsmessgeräte sind die geodätische und die industrielle Vermessung. Das Grundprinzip der Entfernungsmessung mit den bekannten Geräten beruht auf der Auswertung einer zeitlichen Veränderung einer Kenngrösse der vom Gerät emitierten und von einem anvisierten Objekt remittierten elektromagnetischen Strahlung. Das Entfernungsmessgerät ist dazu mit einem Sender zur Emission einer intensitätsmodulierten Strahlung ausgestattet. Bei Handgeräten handelt es sich dabei vornehmlich um eine optische Strahlung im sichtbaren Wellenlängenspektrum, um das Anvisieren der Messpunkte zu erleichtern. Die optische Strahlung wird von dem anvisierten Messobjekt remittiert bzw. gestreut und von einem in das Gerät eingebauten Empfänger registriert. Aus der zeitlichen Verzögerung der empfangenen modulierten Strahlung gegenüber der vom Sender emittierten Strahlung ergibt sich die Entfernung zum Messobjekt.

In Innenräumen ist die bei Handgeräten verwendete sichtbare Strahlung, im allgemeinen Laserstrahlung, auf dem Messobjekt von Auge gut erkennbar. Wird das Messobjekt jedoch intensiv bestrahlt, hat das Auge Schwierigkeiten, den Messpunkt vom Hintergrund zu unterscheiden. Dies ist insbesondere bei Aussenanwendungen der Fall, bei denen das Messobjekt vielfach sehr intensiver Sonnenbestrahlung ausgesetzt ist und der vom Messobjekt remittierte Messpunkt mit freiem Auge oft nur schwer oder gar nicht mehr wahrgenommen wird. Zur Abhilfe dieses Problems werden von den Anwendern des Entfernungsmessgeräts manchmal Brillen eingesetzt, die optischen Filtern versehen sind, welche nur die vom Messobjekt reflektierte Messstrahlung passieren lassen. Die behelfsweise Spezialbrille ist sehr bruchgefährdet, sie ist auch oft gerade nicht zur Hand und wird vom Anwender vielfach als unangenehm und lästig empfunden. Als Alternative zur Lösung des Problems sind für bekannte Entfernungsmessgeräte auch Zielfernrohre bekannt, die an das Gerät ansetzbar sind. Diese Zielfernrohre sollen dem Anwender des Entfernungsmessgerätes dabei helfen, den Messpunkt am auszumessenden Messobjekt zu erkennen. Es sind auch bereits Zielfernrohre bekannt, die zusätzlich mit Spezialfiltern versehen sind, welche auf das Licht des Messpunktes abgestimmt sind. Zielfernrohre sind aufwendig und teuer. Insbesondere müssen Zielfernrohre oder ähnliche optische Visierhilfen immer zum Laserstrahl justiert sein. Dadurch sind derartige Geräte sehr stossempfindlich. Um diesem Nachteil zu begegnen und nicht das Gewicht des Entfernungsmessgerätes unnötig zu vergrössem, ist das Zielfernrohr oftmals als ein separates Teil ausgebildet, welches erst bei Bedarf am Entfernungsmessgerät montiert und justiert werden muss. Das separate Zielfernrohr ist empfindlich gegenüber Beschädigungen. Oft wird es vom Anwender nicht mitgeführt, oder es ist überhaupt verloren gegangen. Nach der Montage muss es erst wieder zum Laserstrahl justiert werden.

Aus der EP 0 661 519 A1 ist ein Messgerät mit einer integrierten Aufnahmekamera und einer Auswerteelektronik zur Differenzbildung zweier aufgenommener Bilder bekannt. Die Funktion des Geräts setzt voraus, dass am Zielort ein Reflektor in Form eines Zielprismas für die eingestrahlte Infrarotstrahlung angebracht wird. Der mit dem Zielprisma ausgestattete Zielort wird ohne und mit zusätzlichem Infrarotblitz aufgenommen und und daraus eine Differenz gebildet. Die am Gerät ermittelten Abweichungen von der optischen Achse werden auf einer Anzeigevorrichtung anzeigt. Für den Betrieb dieses Geräts muss bereits vor der Messung der Zielort exakt festgelegt werden, um dann dort das Zielprisma mit möglichst geringer Abweichung anzubringen. Es versteht sich, dass die Anbringung des Zielprismas bei nur schwer zugängigen oder erreichbaren Zielorten sehr aufwändig sein kann. Soll der Zielort verändert werden, muss das Zielprisma erst am neuen Ort angebracht werden, bevor eine neue Messung vorgenommen werden kann. Nach Beendigung der Messung muss das Zielprisma wieder entfernt werden. Das Zielprisma ist ein separates Bauteil, welches bruchgefährdet ist, möglicherweise gerade nicht zur Hand ist oder verloren gehen kann.

In der WO 00/25089 ist ein Gerät zur 3-D Darstellung eines Objekts beschrieben. Das Gerät weist eine Entfernungsmesseinheit mit einer integrierten Kamera auf. Die Kamera dient dazu, ein Zielgebiet zweidimensional zu erfassen. Die Entfernungsmesseinheit nimmt die Abstände einer Anzahl von Punkten eines Objekts innerhalb des Zielgebiets auf. Die gemessenen Entfernungen werden mit dem zweidimensionalen Bild des Zielgebiets verknüpft, um daraus eine dreidimensionale Darstellung des Objekts zu erzeugen. Das Gerät ist bezüglich seines Aufbaus relativ komplex und unter anderem für militärische Anwendungen vorgesehen. Das Problem des Anvisierens eines Objekts unter ungünstigen Lichtverhältnissen ist in der Druckschrift nicht angesprochen.

Aus der EP 1008 831 sind ein Gerät und ein Verfahren zur Distanzmessung mit Hilfe der Triangulation bekannt. Dazu wird ein digitales Bild des Messobjekts mit dem vom Messlaser erzeugten Messpunkt aufgenommen und in eine binäre Bilddatei umgeformt. Zur Umformung der Bilddaten in eine binäre Bilddatei muss zuvor ein Schwellenwert festgelegt werden. Die Position des Messpunktes wird rechnerisch ermittelt. Wenn die Position des Messpunktes auf dem Bild des Messobjekts bekannt ist, kann über Triangulation die Entfernung bestimmt werden. Zur Festlegung des Schwellenwertes für die Umformung des aufgenommenen Bildes in eine binäre Bilddatei kommt eine dreistufige Differenzbildauswertung zu Anwendung. In der ersten Stufe werden digitale Bilder des Messobjekts mit und ohne Messpunkt erfasst und abgespeichert. In einer zweiten Stufe werden jeweils Differenzbilder aus den Bildern mit und ohne Messpunkt gebildet. In einer dritten Stufe schliesslich wird ein minimaler Helligkeitswert festgelegt, der als Schwellenwert für die Umformung der digitalen Bilddaten in eine binäre Bilddatei dient. Das Anvisieren des Messobjekts erfolgt auf herkömmliche Weise. Das Gerät besitzt keine elektronische Anzeigeeinrichtung für die vom Messobjekt aufgenommenen Bilder.

In der JP 08021878 ist ein Laserentfernungsmessgerät beschrieben, welches für die Distanzmessung zu einem Messobjekt das Prinzip der Laufzeitmessung anwendet. Nach einer optischen Filterung durchläuft die vom Messobjekt remittierte Messstrahlung einen Bildverstärker. Das verstärkte Signal wird zur Punktpositionserfassung einem zweidimensionalen Photodioden-Array zugeführt. Es findet keine Synchronisation zwischen der Bilderfassung des Messobjekts und der Lasermessstrahlung statt. Die mit Hilfe des Photodioden-Arrays festgestellte Position der (gescannten) Messpunkte wird dem Bild des Messobjekts überlagert und kann auf einem Display dargestellt werden. Aus den Bilddaten und den Distanzdaten der Messpunkte kann ein 3-D Bild des Messobjekts erstellt werden. Dies erlaubt die Darstellung von virtuellen Schnittbildern des Messobjekts.

Aufgabe der vorliegenden Erfindung ist es daher, diesen Nachteilen der Entfernungsmessgeräte des Stand der Technik abzuhelfen. Ein Entfernungsmessgerät soll dahingehend modifiziert werden, dass auch bei ungünstigen Lichtverhältnissen, insbesondere bei stark bestrahlten Messobjekten, ein am anvisierten Messobjekt erzeugter Messpunkt einfach und eindeutig identifizierbar ist. Die Lösung soll einfach und kostengünstig realisierbar sein. Das Gerät soll kompakt und handhaltbar sein und einen flexiblen Einsatz erlauben.

Diese Aufgaben werden erfindungsgemäss durch ein handhaltbares Entfernungsmessgerät mit Visiereinrichtung gelöst, welches die im kennzeichnenden Abschnitt des Patenanspruchs 1 angeführten Merkmale aufweist. Ein Verfahren zur Detektion eines Messpunktes an einem Messobjekt, dessen Entfernung bestimmt werden soll, umfasst die im unabhängigen Verfahrensanspruch 8 angeführten Verfahrensschritte. Bevorzugte Ausführungsvarianten und/oder vorteilhafte Weiterbildungen des Geräts und des Verfahrens sind jeweils Gegenstand der abhängigen Vorrichtungs- bzw. Verfahrensansprüche.

Das erfindungsgemässe Entfernungsmessgerät mit Visiereinrichtung weist einen Sender zur Emission einer optischen Strahlung, eine Empfangsoptik für die von einem Messobjekt remittierte oder gestreute optische Messstrahlung, einen der Empfangsoptik nachgeschalteten Empfänger zur Umwandlung der optischen Strahlung in elektrische Messsignale, sowie eine Signalverarbeitungsanlage zum Vergleich der Messsignale mit Referenzsignalen auf, um daraus den Abstand des Messobjekts zu bestimmen und das Ergebnis dem Anwender verfügbar zu machen. Mit Hilfe der optischen Strahlung ist am Messobjekt ein Messpunkt erzeugbar, der von der Visiereinrichtung erfassbar ist. Die Visiereinrichtung umfasst ein fotoelektrisches Bilderfassungssystem, welches mit einer elektronischen Anzeigeeinrichtung verbunden ist, und eine Auswerteeinheit zur Differenzwertbildung für die erfassten Bilder. Das fotoelektronische Bilderfassungssystem der Visiereinrichtung und die elektronische Anzeigeeinrichtung sind in einem gemeinsamen Gehäuse angeordnet, welches mit einem separaten Sucherobjektiv für das fotoelektronische Bilderfassungssystem ausgerüstet ist.

Die mit einem fotoelektrischen Bilderfassungssystem ausgestattete Visiereinrichtung für das Entfernungsmessgerät macht Gebrauch von der gegenüber dem Auge weitaus grösseren Lichtempfindlichkeit derartiger Systeme. Damit sind die Voraussetzungen geschaffen, auch bei ungünstigen Lichtverhältnissen einen auf dem Messobjekt erzeugten Messpunkt zu detektieren. Darüber hinaus weist die Visiereinrichtung auch eine Auswerteeinheit zur Differenzwertbildung für die von dem fotoelektrischen Bilderfassungssystem gelieferten Signale bzw. Daten auf und eine elektronische Anzeigeeinrichtung, die es ermöglicht, das vom Bilderfassungssystem aufgenommene Bild der Messobjekts, gegebenenfalls nach einer Bearbeitung der Signale bzw. Daten, dem Anwender anzuzeigen. Der Anwender hat somit eine unmittelbare Kontrollmöglichkeit, ob das Entfernungsmessgerät auch wirklich das Messobjekt anstrahlt, dessen Entfernung gemessen werden soll. Optische Hilfsmittel, wie beispielsweise Spezialbrillen oder ein spezielles Zielfernrohr, die bruchgefährdet sind und gerne verloren gehen oder vergessen werden, können somit entfallen. Damit wird auch eine Justierung des Zielfernrohrs hinfällig. Anstelle einer Justierung kann der dem Anwender angezeigte Bildausschnitt per Software ausgewählt werden. Das fotoelektronische Bilderfassungssystem der Visiereinrichtung und die elektronische Anzeigeeinrichtung sind in einem gemeinsamen Gehäuse angeordnet, welches mit einem separaten Sucherobjektiv für das fotoelektronische Bilderfassungssystem ausgerüstet ist. Die Komponenten zur Entfernungsmessung und diejenigen der Visiereinrichtung mit der elektronischen Anzeigeeinrichtung sind getrennt voneinander angeordnet und unabhängig voneinander betreibbar. Daraus resultiert eine grössere Flexibilität hinsichtlich der Gesamtkonzeption des Entfernungsmessgeräts.

Bevorzugte fotoelektrische Bilderfassungssysteme sind digitale Kameras, die als integrierte Halbleiterbauelemente, vorzugsweise in C-MOS-Bauweise, in sehr kompakter Bauweise erhältlich sind. Digitalkameras mit fotoelektrischen Halbleitern mit 3 Megapixel und mehr sind mittlerweile sehr kostengünstig. Die hohe Auflösung digitaler Kameras erlaubt ein sehr präzises Anvisieren des Messobjekts.

Zweckmässigerweise wird die hohe Auflösung der digitalen Kameras auch dafür genützt, um in Verbindung mit der Auswerteeinheit auch eine elektronische Zoomfunktion zu realisieren. Dies hat den Vorteil, dass sich der Anwender zunächst grob orientieren kann, bei einer korrekten Anvisierung des Messobjekts den Messbereich heranzoomen kann, um dann den Messpunkt in der Messumgebung exakt zu lokalisieren.

Zur Verbesserung des Signal zu Rauschen Verhältnisses wird in einer vorteilhaften Variante der Erfindung ein fotoelektrisches Bilderfassungssystem, insbesondere eine monochrome Digitalkamera, eingesetzt, die ein fotoelektrisches Halbleiterbauelement mit monochromer Lichtempfindlichkeit aufweist. Der lichtempfindlichen Erfassungsfläche der Digitalkamera ist ein optischer Bandpassfilter mit einer Durchlässigkeit im Wellenlängenbereich der optischen Strahlung des Entfernungsmessgeräts vorgeschaltet

In einer alternativen Ausführungsvariante der Erfindung wird eine Farbkamera mit einem Farbkamera-Chip verwendet, der zur Erfassung der drei Grundfarben ausgebildet ist. Der Farbkamera-Chip weist bereits optische Filter für den roten, grünen und blauen Spektralbereich auf. Wird das Messobjekt beispielsweise mit einer Laserstrahlung im roten Wellenlängenbereich bestrahlt und nur der Rotanteil des von der Farbkamera gelieferten Bildes zur Auswertung herangezogen, so verbessert sich dadurch das Signal zu Rauschen Verhältnis der im Bild erfassten Lasermesspunktes gegenüber der Umgebungsstrahlung beträchtlich.

Die Visiereinrichtung kann auch in einem separaten Gerät integriert sein. Beispielsweise handelt es sich dabei um einen Palmtop oder Laptop Computer mit integrierter Kamera. Die Bearbeitung der von der Kamera gelieferten Signale bzw. Dater erfolgt im Computer. Das Bild wird über das Display oder den Bildschirm des Computers ausgegeben. Der Computer und das Entfernungsmessgerät sind dabei miteinander verbindbar, um die Stahlungsquelle, z.B. den Laser, und die Bilderfassung zu synchronisieren. Die Verbindung erfolgt vorzugsweise über eine drahtlose Verbindung, beispielsweise nach dem Bluetooth Standard. Mit einer derartigen Ausstattung ist der Computer als Visiereinrichtung einsetzbar. Diese Variante eignet sich insbesondere als Nachrüstmöglichkeit für bereits bestehende Entfernungsmessgeräte.

Bei einer weiteren vorteilhaften Ausführungsvariante der Erfindung ist die Visiereinrichtung in das Entfernungsmessgerät integriert. Das Entfernungsmessgerät weist dazu beispielsweise in Nachbarschaft zu seinem Emissionsfenster für die optische Strahlung, z.B. die Laserstrahlung, eine digitale Kamera mit einem Sucherobjektiv auf, die mit einer im Gerät vorhandenen Auswerteeinrichtung zur Differenzwertbildung der erfassten Bilder verbunden ist. Am Gerätegehäuse ist ein Display oder dergleichen zur Anzeige der von der digitalen Kamera aufgenommenen Bilder angeordnet. Diese integrierte Ausführungsvariante ist besonders einfach zu handhaben und erfordert keine zusätzlichen Geräte.

Bei dem erfindungsgemässen Verfahren zur Bestimmung des Abstands zu einem Messobjekt, wird das Messobjekt mit Hilfe eines Entfernungsmessgeräts mit einer optischen Strahlung, vorzugsweise mit einer Laserstrahlung im sichtbaren Spektrum, angestrahlt. Der am Messobjekt erzeugte Messpunkt wird mit Hilfe eines fotoelektrischen Bilderfassungssystems aufgenommen, einer Auswerteeinheit zugeführt, welche Differenzwerte der aufgenommenen Bilder bildet, und die Ergebnisse auf einer elektronischen Anzeigeeinrichtung dargestellt. Das Anvisieren erfolgt bereits unmittelbar mit der Messstrahlung bzw. dem Messlaser des Entfemungsmessgeräts. Dadurch werden Fehler zuverlässig vermieden, und es kann auf eine zusätzliche Parallaxenkorrektur verzichtet werden. Der Einsatz eines fotoelektrischen Bilderfassungssystems macht Gebrauch von ausserordentlich hohen Lichtempfindlichkeit derartiger Systeme. Bevorzugt werden digitale Kameras mit integrierten Halbleiteraufnahme-Chips, vorzugsweise auf C-MOS Bauweise basierend, verwendet. C-MOS Bauelemente weisen einen relativ geringen Stromverbrauch auf. Damit eignen sie sich insbesondere für tragbare Geräte mit Batterien oder Akkumulatoren. Bei Bestätigung der Korrekten Position des Messpunkts wird der durch einen Vergleich der Messsignale mit Referenzsignalen ermittelte Abstand angezeigt.

Digitale Kameras sind mittlerweile kostengünstig erhältlich und weisen bereits ein sehr hohes Auflösungsvermögen auf. In der Regel ist dies höher, als es für die Identifikation des Messpunktes auf einer Anzeigeanrichtung, einem Bildschirm, einem Display oder dergleichen erforderlich ist. Wegen der hohen Empfindlichkeit der digitalen Kameras kann bei guten Lichtverhältnissen, das heisst bei schwach beleuchteter Umgebung und kurzen Distanzen, oft auch nur mit einem einzigen Bild gearbeitet werden. In einer einfachen Variante der Erfindung kann bei günstigen Lichtverhältnissen auf der Anzeigeeinrichtung auch eine Markierung nach Art eines Fadenkreuzes bei einem Fernrohr eingeblendet werden. Eine elektronische Detektion des Messpunktes kann dabei entfallen. Es muss nur ab und zu nach Massgabe der eingeblendeten Markierung nachjustiert werden. Eine Parallaxe, die durch den Versatz des Laserstrahls zu der Kameraoptik auftritt, kann dabei mit einer groben Distanzmessung bestimmt und vorzugsweise automatisch korrigiert werden.

Zur zuverlässigen Ortung des Messpunktes wird mit dem fotoelektrischen Bilderfassungsssystem vom Messobjekt wenigstens ein Bild ohne und wenigstens ein Bild mit eingestrahlter optischer Strahlung aufgenommen. Aus den elektronisch umgeformten Bilder wird in der Auswerteeinheit ein Differenzbild ermittelt, in dem der Messpunkt elektronisch detektiert wird. Der Ort des detektierten Messpunktes wird auf dem auf der elektronischen Anzeigeeinrichtung dargestellten Bild des Messobjekts durch eine eingeblendete Marke oder dergleichen hervorgehoben.

Sind die Lichtverhältnisse sehr schlecht, beispielsweise indem der Messpunkt vom Messobjekt überstrahlt wird, wie dies bei intensiver Sonneneinstrahlung der Fall sein kann, wird durch Mittelung vieler Bilder die Identifikation des Messpunktes ermöglicht. Dazu werden mehrere, zeitlich kurz aufeinanderfolgende Bilder des Messobjekts mit und ohne eingestrahlter optischer Strahlung aufgenommen. Da sich der Bildausschnitt durch kleine Bewegungen und Erschütterungen verschieben kann, wird immer ein Bild mit und eines ohne Lasermesspunkt unmittelbar hintereinander aufgenommen und daraus ein Differenzbild ermittelt. Die Differenzbilder werden gemittelt. Diese Massnahme wirkt sich sehr vorteilhaft auf das Signal zu Rauschen Verhältnis aus, da bei der Mittelung unerwünschtes Rauschen herausgefiltert wird.

Zur Verbesserung des Signal zu Rauchen Verhältnisses erweist es sich von Vorteil, wenn während der Aufnahme(n) des Messobjekts mit eingestrahlter optischer Strahlung die Strahlungsleistung synchron erhöht wird, vorzugsweise auf das etwa 2-fache bis etwa 20-fache gesteigert wird. Während für den kontinuierlichen Betrieb von derartigen mit Lasern ausgestatteten Geräten die mittlere Laserleistung durch Sicherheitsnormen auf eine bestimmte Leistung begrenzt ist, dürfen im gepulsten Betrieb kurzfristig auch höhere Leistungen ausgestrahlt werden.

Bei einem alternativen Verfahren wird zur Verbesserung des Signal zu Rauschen Verhältnisses das Messobjekt mit einem monochromen Bilderfassungssystem, vorzugsweise einer monochromen Aufnahmekamera mit einem fotoelektrischen Halbleiterbauelement, insbesondere auf C-MOS Basis, aufgenommen. Dabei wird die vom Messobjekt remittierte oder gestreute Strahlung wenigstens zeitweise zuvor durch einen Bandpassfilter mit einer Durchlässigkeit im Wellenlängenbereich der eingestahlten optischen Strahlung geleitet.

Eine andere Möglichkeit zur Verbesserung des Signal zu Rauschen Verhältnisses benutzt zur Aufnahme des Messobjekt eine Farbkamera. Dabei wird vorzugsweise nur der dem Wellenlängenspektrum der eingestrahlen optischen Strahlung entsprechende Bildanteil weiter verarbeitet.

Um auch bereits bestehende Entfernungsmessgeräte in erfindungsgemässen Sinn einsetzen zu können, wird die vom Messobjekt stammende optische Strahlung mit Hilfe einer Kamera erfasst, die in einem separaten Gerät, vorzugsweise in einem Palmtop oder Laptop Computer, angeordnet ist. Der Computer ermöglicht die Weiterverarbeitung der erfassten Signale bzw. Daten. Als Anzeigeeinrichtung dient der Bildschirm oder ein Display des Computers. Der Computer und das Entfernungsmessgerät werden dazu miteinander verbunden, um die Stahlungsquelle, z.B. den Laser, und die Bilderfassung zu synchronisieren. Die Verbindung erfolgt vorzugsweise über eine drahtlose Verbindung, beispielsweise nach dem Bluetooth Standard. Mit einer derartigen Ausstattung ist der Computer als Visiereinrichtung einsetzbar.

Das erfindungsgemässe Verfahren kann auch mit einem speziell ausgebildeten Entfernungsmessgerät durchgeführt werden. Dabei erfolgt die Bilderfassung des Messobjekts mit Hilfe eines fotoelektrischen Bilderfassungssystems, vorzugsweise einer Digitalkamera, das in das Entfernungsmessgerät integriert ist. Die Auswertung der erfassten Signale erfolgt mit einer im Gerät angeordneten Auswerteeinheit. Die aufgenommenen und verarbeiteten Signale bzw. Daten werden dann auf einer elektronischen Anzeigevorrichtung, beispielsweise einem Display oder dergleichen, dargestellt, das am Entfernungsmessgerät vorgesehen ist.

Im folgenden wird die Erfindung unter Bezugnahme auf ein in den Zeichnungen schematisch dargestelltes Ausführungsbeispiel näher erläutert. Es zeigen:
- Fig.1: eine Ansicht eines erfindungsgemässen Entfernungsmessgeräts; und
- Fig. 2: ein Ablaufdiagramm zur Erläuterung des erfindungsgemässen Verfahrens.

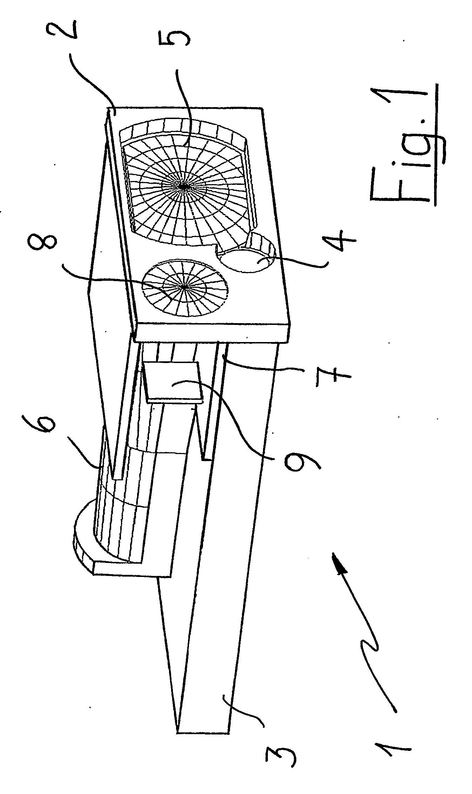

Fig. 1 zeigt eine schematische Ansicht eines Ausführungsbeispiels des Entfemungsmessgeräts, das gesamthaft mit dem Bezugszeichen 1 bezeichnet ist. Das Entfernungsmessgerät 1, insbesondere ein Laserentfernungsmessgerät, ist ohne Abdeckgehäuse dargestellt, um einen Einblick auf die erfindungswesentlichen Geräteteile zu ermöglichen. In einer Frontplatte 2 des Entfernungsmessgeräts sind mehrere Öffnungen vorgesehen. Eine der Öffnungen ist ein Austrittfenster 4 für den Messstrahl eines auf einer Trägerplatte 3 angeordneten Lasers, der in der Darstellung nicht näher bezeichnet ist. Den weitaus grössten Teil der Frontplatte 2 nimmt ein Empfangsobjektiv 5 für die von einem Messobjekt remittierte oder gestreute Messstrahlung ein. Hinter dem Empfangsobjektiv 5 ist eine optoelektronische Einheit 6 auf der Trägerplatte 3 montiert. Die optoelektronische Einheit 6 ist konventionell aufgebaut und umfasst eine Referenzstrecke, diverse optische Elemente, beispielsweise einen Strahlteiler, Umlenkspiegel und dergleichen, wenigstens einen lichtelektrischen Detektor, Signalwandler, Filter usw. Die erfassten und umgewandelten Messsignale werden an eine zentrale Signalverarbeitungsanlage weitergeleitet, die eine Speichereinheit und einen Mikroprozessor umfasst und in Fig. 1 bei 7 angedeutet ist. Soweit entspricht das Entfernungsmessgerät 1 den von der Anmelderin angebotenen, bekannten Geräten, siehe z.B. DE 9421267 U.

An der Frontplatte 2 ist zusätzlich ein Sucherobjektiv 8 angeordnet, hinter dem ein Bilderfassungssystem, insbesondere eine Aufnahmekamera 9 mit einem fotoelektrischen Aufnahmechip angeordnet. Der Aufnahmechip ist beispielsweise ein auf C-MOS Bauweise basierendes Halbleiterbauelement. Der Aufnahmechip kann für monochrome oder für farbige Aufnahmen ausgelegt sein. Derartige Bauteile sind hinlänglich bekannt und können beispielsweise von der Firma Intertec Comoponents, Deutschland oder der Firma OmniVision, U.S.A. bezogen werden. Die Aufnahmekamera 9 ist mit der Signalverarbeitungsanlage 7 verbunden.

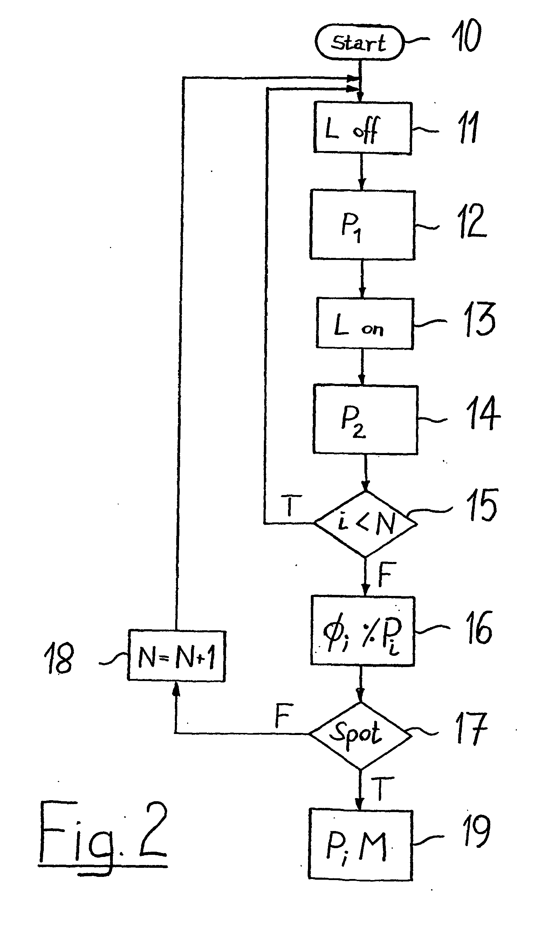

Fig. 2 zeigt den Ablauf des erfindungsgemässen Verfahrens zur Detektion eines Messpunktes an einem Messobjekt, dessen Entfernung bestimmt werden soll. Mit dem Einschalten des Entfernungsmessgeräts wird in der Signalerfassungseinheit auch eine Anvisierroutine gestartet. Dies ist im Ablaufdiagramm durch die Startposition 10 angedeutet.

Nach einem ersten groben Anvisieren des Messobjekts wird in einem nächsten Schritt 11 der Laser kurzfristig abgeschaltet. Danach wird mit der Aufnahmekamera ein Bild 12 des Messobjekts ohne Laserbestrahlung aufgenommen und gespeichert. In einem weiteren Schritt 13 wird der Laser wieder eingeschaltet und wird ein weiteres Bilde 14 des nunmehr vom Laser angestrahlten Messobjekts mit dem Messpunkt aufgenommen und gespeichert. In einer Abfrageroutine 15 wird abgefragt, ob die Anzahl i der aufgenommenen Bilder kleiner ist als eine vorzugsweise vorgebbare Maximalzahl N. Ist die vorgebbare Maximalzahl N noch nicht erreicht, werden weitere Bilder des Messobjekts aufgenommen und gespeichert. Dabei wird immer ein Bild mit und ein Bild ohne Lasermesspunkt aufgenommen und daraus die Differenz gebildet. Dadurch werden Fehlmessungen verhindert, die durch eine Verschiebung des anvisierten Bildausschnitts infolge von Erschütterungen und Verschiebungen auftreten können. Bei Erreichen der Maximalzahl N werden die aufgenommenen Differenzbilder in einem weiteren Schritt 16 gemittelt, um das Signal zu Rauschen Verhältnis zu verbessern. Das resultierende gemittelte Differenzbild wird in einem Analyseschritt 17 analysiert, ob darauf der Messpunkt detektierbar ist. Dies kann beispielsweise durch eine Schwellenwertanalyse der Helligkeit der Differenzsignale erfolgen. Ergibt die Analyse, dass der Messpunkt auf dem Messobjekt noch nicht detektierbar ist, dann wird die Maximalzahl N der aufzunehmenden Bilder erhöht. Dies ist im Schritt 18 durch die programmiertechnische Zuordnung N = N + 1 angedeutet. Die Zuordnung N = N + 1 bedeutet dabei nicht notwendigerweise eine Erhöhung um genau 1 Bild. Es soll damit nur symbolisiert werden, dass die Maximalzahl N um einen fest eingestellten oder auch um einen eingebbaren Wert zu erhöhen ist. Wird im Differenzbild der Messpunkt auf dem Messobjekt detektiert, erfolgt die Anzeige 19 des Bildes des Messobjekts auf einem Display, einem Bildschirm oder dergleichen. Die Lage des Messpunkts wird durch eine vorzugsweise elektronisch eingeblendete Marke hervorgehoben. Damit ist der Anvisiervorgang beendet und die Messung der Distanz des Messobjekts kann erfolgen.

Das in Fig. 1 dargestellte Ausführungsbeispiel des Entfernungsmessgeräts weist eine in das Gerät integrierte Aufnahmekamera auf. Die Erfindung ist jedoch nicht auf derartige Geräte beschränkt. Beispielsweise kann die Aufnahmekamera auch in einen Laptop oder Palmtop Computer integriert sein. Der Computer und das Entfernungsmessgerät werden dazu miteinander verbunden, um den Laser und die Bilderfassung zu synchronisieren. Die Verbindung erfolgt vorzugsweise über eine drahtlose Verbindung, beispielsweise nach dem Bluetooth Standard. Mit einer derartigen Ausstattung ist der Computer als Visiereinrichtung einsetzbar. Die Verfahrens zur Detektion des Messpunktes wird dann vom Computer durchgeführt. Die Anzeige des Bildes des Messobjekts und des detektierten Messpunktes erfolgt über das Display oder den Bildschirm des Computers. Die Kapazität des Computers ermöglicht es, durch die Aufnahme mehrerer Bilder und durch die Ermittlung der Distanzinformationen ein elektronisches Modell beispielsweise einer Fassade zu generieren. Das vom Computer generierte elektronische Modell erlaubt es dann, im Büro anhand eines gegenständlichen Modells der Fassade viele weitere Messungen durchzuführen. Dies ist von Vorteil, wenn beispielsweise ein Gerüst an der Fassade aufgestellt werden soll oder um Messungen an sonst nur schwer zugänglichen Bereichen eines Objekts vorzunehmen.

## Patentansprüche

1. Handhaltbares Entfernungsmessgerät (1) mit einer Visiereinrichtung (8, 9), das einen Sender (4) zur Emission einer optischen Strahlung, eine Empfangsoptik (5) für die von einem Messobjekt remittierte oder gestreute optische Messstrahlung, einen der Empfangsoptik (5) nachgeschalteten Empfänger (6) zur Umwandlung der optischen Strahlung in elektrische Messsignale, sowie eine Signalverarbeitungsanlage (7) zum Vergleich der Messsignale mit Referenzsignalen umfasst, um daraus den Abstand des Messobjekts zu bestimmen und das Ergebnis dem Anwender verfügbar zu machen, **dadurch gekennzeichnet, dass** mit der emittierten optischen Strahlung am Messobjekt ein Messpunkt erzeugbar ist, der mit Hilfe der Visiereinrichtung erfassbar ist, dass die Visiereinrichtung (8, 9) ein fotoelektrisches Bilderfassungssystem (9), welches mit einer elektronischen Anzeigeeinrichtung verbunden ist, und eine Auswerteeinheit (7) zur Differenzwertbildung für die erfassten Bilder umfasst, und dass das fotoelektrische Bilderfassungssystem (9) der Visiereinrichtung und die elektronische Anzeigeeinrichtung in einem gemeinsamen Gehäuse angeordnet sind, welches mit einem separaten Sucherobjektiv (8) für das fotoelektrische Bilderfassungssystem (9) ausgerüstet ist.

2. Entfernungsmessgerät nach Anspruch 1, **dadurch gekennzeichnet, dass** das Bilderfassungssystem (9) ein fotoelektrisches Halbleiterbauelement umfasst, das vorzugsweise auf C-MOS-Bauweise beruht.

3. Entfernungsmessgerät nach Anspruch 2, **dadurch gekennzeichnet, dass** das fotoelektrische Halbleiterbauelement eine monochrome Lichtempfindlichkeit aufweist und seiner lichtempfindlichen Erfassungsfläche ein optischer Bandpassfilter mit einer Durchlässigkeit im Wellenlängenbereich der optischen Strahlung des Entfernungsmessgeräts vorgeschaltet ist.

4. Entfernungsmessgerät nach Anspruch 2, **dadurch gekennzeichnet, dass** das fotoelektrische Halbleiterbauelement ein Farbkamera-Chip ist, der zur Erfassung der drei Grundfarben ausgebildet ist.

5. Entfernungsmessgerät nach einem der Ansprüche 2 - 4, **dadurch gekennzeichnet, dass** das Halbleiterbauelement in Verbindung mit der Auswerteeinheit eine elektronische Zoomfunktion aufweist.

6. Entfernungsmessgerät nach einem der vorangehenden Ansprüche, **dadurch gekennzeichnet, dass** das fotoelektrische Bilderfassungssystem in einem separaten Gerät, vorzugsweise in einem Palmtop oder Laptop Computer, integriert ist, das ein Display oder einen Bildschirm aufweist und, vorzugsweise drahtlos, mit dem Entfernungsmessgerät verbindbar ist.

7. Entfernungsmessgerät nach einem der Ansprüche 1 - 5 **dadurch gekennzeichnet, dass** die Visiereinrichtung das Entfernungsmessgerät (1) integriert ist und am Entfernungsmessgerät ein Display oder dergleichen zur Anzeige der vom fotoelektrischen Bilderfassungssystem (9) aufgenommenen Bilder angeordnet ist.

8. Verfahren zur Bestimmung des Abstands zu einem Messobjekt, bei dem das Messobjekt mit Hilfe eines handhaltbaren Entfernungsmessgeräts (1) mit einer optischen Strahlung, vorzugsweise mit einer Laserstrahlung im sichtbaren Spektrum, angestrahlt wird und der am Messobjekt erzeugte Messpunkt mit Hilfe eines fotoelektrischen Bilderfassungssystems (9) erfasst, einer Auswerteeinheit (7) zur Differenzwertbildung zugeführt wird, die Ergebnisse auf einer elektronischen Anzeigeeinrichtung dargestellt werden und bei Bestätigung der korrekten Position des Messpunkts der durch einen Vergleich der in Messsignale umgeformten vom Messobjekt remittierten oder gestreuten optischen Messstrahlung mit Referenzsignalen ermittelte Abstand zum Messobjekt angezeigt wird.

9. Verfahren nach Anspruch 8, **dadurch gekennzeichnet, dass** das fotelektrische Bilderfassungssystem vom Messobjekt wenigstens ein Bild ohne und wenigstens ein Bild mit eingestrahlter optischer Strahlung aufnimmt, aus den elektronisch umgeformten Bilder in der Auswerteeinheit ein Differenzbild ermittelt wird, in dem der Messpunkt elektronisch detektiert wird, und am Ort des detektierten Messpunkts dem auf der elektronischen Anzeigeeinrichtung dargestellten Bild des Messobjekts eine elektronische Markierung überlagert wird.

10. Verfahren nach Anspruch 9, **dadurch gekennzeichnet, dass** mehrere, zeitlich kurz aufeinanderfolgende Bilder des Messobjekts mit und ohne eingestrahlter optischer Strahlung aufgenommen werden und die daraus ermittelten Differenzbilder gemittelt werden.

11. Verfahren nach Anspruch 9 oder 10, **dadurch gekennzeichnet, dass** während der Aufnahme(n) des Messobjekts mit eingestrahlter optischer Strahlung die Strahlungsleistung synchron erhöht wird, vorzugsweise auf das etwa 2-fache bis etwa 20-fache gesteigert wird.

12. Verfahren nach einem der Ansprüche 8 - 11, **dadurch gekennzeichnet, dass** vom Messobjekt mit einem monochromen Bilderfassungssystem, vorzugsweise einer monochromen Aufnahmekamera mit einem fotoelektrischen Halbleiterbauelement, insbesondere auf C-MOS Basis, Bilder aufgenommen werden, wobei die vom Bilderfassungssystem erfasste Strahlung wenigstens zeitweise zuvor durch einen Bandpassfilter mit einer Durchlässigkeit im Wellenlängenbereich der eingestahlten optischen Strahlung geleitet wird.

13. Verfahren nach einem der Ansprüche 8 - 11, **dadurch gekennzeichnet, dass** die vom Messobjekt stammende optische Strahlung mit einer Farbkamera erfasst wird, wobei vorzugsweise nur der dem Wellenlängenspektrum der eingestrahlen optischen Strahlung entsprechende Bildanteil verarbeitet wird.

14. Verfahren nach einem der Ansprüche 8 - 13, **dadurch gekennzeichnet, dass** die vom Messobjekt stammende optische Strahlung mit Hilfe einer Kamera erfasst wird, die in einem separaten Gerät, vorzugsweise in einem Palmtop oder Laptop Computer, angeordnet ist, welches mit einer eigenen Auswerteeinheit und Anzeigeeinrichtung ausgestattet und mit dem Entfernungsmessgerät gekoppelt ist.

15. Verfahren nach einem der Ansprüche 8 - 13, **dadurch gekennzeichnet, dass** die Bilderfassung des Messobjekts mit Hilfe eines fotoelektrischen Bilderfassungssystems erfolgt, das in das Entfernungsmessgerät integriert ist, wobei die Auswertung der erfassten Signale mit einer im Gerät angeordneten Auswerteeinheit erfolgt und die Darstellung auf einer elektronischen Anzeigevorrichtung, beispielsweise einem Display oder dergleichen, erfolgt, das am Entfernungsmessgerät vorgesehen ist.

## Claims

1. Hand-held distance meter (1) with a sighting device (8, 9), said distance meter comprising a transmitter (4) to emit optical radiation, a light collector (5) for the optical measurement radiation which is sent back or scattered by a measurement object, a receiver (6) which is connected downstream from the light collector (5) to convert the optical radiation into electrical measurement signals, and a signal processing system (7) to compare the measurement signals with reference signals, to determine the distance of the measurement object and make the result available to the user, **characterized in that** with the emitted optical radiation on the measurement object, a measurement point is generated, and can be captured using the sighting device, **in that** the sighting device (8, 9) includes a photoelectric image capture system (9), which is connected to an electronic display device, and an analysis unit (7) to form the difference value for the captured images, and **in that** the photoelectric image capture system (9) of the sighting device and the electronic display device are arranged in a common housing, which is equipped with a separate viewfinder lens (8) for the photoelectric image capture system (9).

2. Distance meter according to Claim 1, **characterized in that** the image capture system (9) includes a photoelectric semiconductor component, which is preferably based on CMOS construction.

3. Distance meter according to Claim 2, **characterized in that** the photoelectric semiconductor component has a monochrome light sensitivity, and an optical band pass filter with a transparency in the wavelength range of the optical radiation of the distance meter is connected upstream from its light-sensitive capturing surface.

4. Distance meter according to Claim 2, **characterized in that** the photoelectric semiconductor component is a colour camera chip, which is designed to capture the three primary colours.

5. Distance meter according to one of Claims 2 - 4, **characterized in that** the semiconductor component, in association with the analysis unit, has an electronic zoom function.

6. Distance meter according to one of the preceding claims, **characterized in that** the photoelectric image capture system is integrated in a separate device, preferably a palmtop or laptop computer, which has a display or screen and can be connected to the distance meter, preferably wirelessly.

7. Distance meter according to one of Claims 1 - 5, **characterized in that** the sighting device is integrated in the distance meter (1), and on the distance meter a display or similar to display the images which are recorded by the photoelectric image capture system (9) is arranged.

8. Method of determining the distance to a measurement object, wherein the measurement object is illuminated, using a hand-held distance meter (1), with optical radiation, preferably laser radiation in the visible spectrum, and the measurement point which is generated on the measurement object is captured using a photoelectric image capture system (9) and fed to an analysis unit (7) to form the difference value, the results are shown on an electronic display device, and on confirmation of the correct position of the measurement point, the distance to the measurement object, which is determined by comparing the measurement radiation which is sent back or scattered by the measurement object and converted into measurement signals with reference signals, is displayed.

9. Method according to Claim 8, **characterized in that** the photoelectric image capture system records at least one image of the measurement object without, and at least one such image with, irradiated optical radiation, a difference image is determined from the electronically converted images in the analysis unit, and the measurement point is detected in it electronically, and at the location of the detected measurement point an electronic marking is overlaid on the image, which is shown on the electronic display device, of the measurement object.

10. Method according to Claim 9, **characterized in that** multiple images of the measurement object in quick succession are recorded with and without irradiated optical radiation, and the difference images which are determined from them are averaged.

11. Method according to Claim 9 or 10, **characterized in that** during the recording(s) of the measurement object with irradiated optical radiation, the radiation power is increased synchronously, preferably by about 2-fold to about 20-fold.

12. Method according to one of Claims 8 - 11, **characterized in that** images of the measurement object are recorded using a monochrome image capture system, preferably a monochrome recording camera with a photoelectric semiconductor component, in particular based on CMOS, the radiation which the image capture system captures being previously passed at least intermittently through a band pass filter with a transparency in the wavelength range of the irradiated optical radiation.

13. Method according to one of Claims 8 - 11, **characterized in that** the optical radiation which is derived from the measurement object is captured using a colour camera, preferably only the image portion corresponding to the wavelength spectrum of the irradiated optical radiation being processed.

14. Method according to one of Claims 8 - 13, **characterized in that** the optical radiation which is derived from the measurement object is captured using a camera which is arranged in a separate device, preferably a palmtop or laptop computer, which is equipped with its own analysis unit and display device and connected to the distance meter.

15. Method according to one of Claims 8 - 13, **characterized in that** the image of the measurement object is captured using a photoelectric image capture system, which is integrated in the distance meter, the captured signals being analysed using an analysis unit which is arranged in the device, and the representation taking place on an electronic display device, preferably a display or similar, which is provided on the distance meter.

## Revendications

1. Appareil de mesure de distance (1) avec un dispositif viseur (8, 9) qui comprend un émetteur (4) pour l'émission d'un rayonnement optique, une optique de réception (5) pour le rayonnement de mesure optique réfléchi ou dispersé par un objet de mesure, un récepteur (6) placé en aval de l'optique de réception (5) pour transformer le rayonnement optique en signaux de mesure électriques ainsi qu'une installation de traitement de signaux (7) pour comparer les signaux de mesure aux signaux de référence pour déterminer à partir de ceux-ci la distance de l'objet de mesure et pour mettre le résultat à la disposition de l'utilisateur, **caractérisé en ce qu'**un point de mesure peut être produit sur l'objet de mesure avec le rayonnement optique émis, point de mesure qui peut être détecté à l'aide du dispositif viseur, que le dispositif viseur (8, 9) comprend un système de détection photoélectrique d'images (9) qui est relié à un dispositif d'affichage électronique et une unité d'évaluation (7) pour former la valeur de différence pour les images détectées et que le système photoélectrique de détection d'images (9) du dispositif viseur et le dispositif d'affichage électronique sont placés dans un boîtier commun qui est équipé d'un objectif chercheur séparé (8) pour le système photoélectrique de détection d'images (9).

2. Appareil de mesure de distance selon la revendication 1, **caractérisé en ce que** le système de détection d'images (9) comprend un composant à semi-conducteur qui repose de préférence sur une construction de type CMOS.

3. Appareil de mesure de distance selon la revendication 2, **caractérisé en ce que** le composant photoélectrique à semi-conducteur présente une sensibilité à la lumière monochrome et qu'un filtre passe-bande optique avec une perméabilité dans la gamme de longueur d'ondes du rayonnement optique de l'appareil de mesure de distance est placé en amont de sa surface de détection sensible à la lumière.

4. Appareil de mesure de distance selon la revendication 2, **caractérisé en ce que** le composant photoélectrique à semi-conducteur est une puce d'appareil photographique couleur qui est configurée pour détecter les trois couleurs fondamentales.

5. Appareil de mesure de distance selon l'une des revendications 2 à 4, **caractérisé en ce que** l'élément à semi-conducteur présente une fonction de zoom électronique en relation avec l'unité d'évaluation.

6. Appareil de mesure de distance selon l'une des revendications précédentes, **caractérisé en ce que** le système photoélectrique de détection d'images est intégré dans un appareil séparé, de préférence dans un ordinateur de poche Palm ou un ordinateur portable qui présente un affichage ou un écran et qui peut être relié, de préférence sans fil, à l'appareil de mesure de distance.

7. Appareil de mesure de distance selon l'une des revendications 1 à 5, **caractérisé en ce que** le dispositif viseur est intégré dans l'appareil de mesure de distance (1) et qu'un affichage ou équivalent est placé sur l'appareil de mesure de distance pour l'affichage des images reçues par le système photoélectrique de détection d'images (9).

8. Procédé pour déterminer la distance d'un objet de mesure pour lequel l'objet de mesure est illuminé au moyen d'un appareil de mesure de la distance pouvant être tenu à la main (1) avec un rayonnement optique, de préférence avec un rayonnement laser dans le spectre visible et que le point de mesure produit sur l'objet de mesure est détecté à l'aide d'un système photoélectrique de détection d'images (9) et est amené à une unité d'évaluation (7) pour former la valeur de différence, les résultats sont représentés sur un dispositif d'affichage électronique et, lors de la confirmation de la position correcte du point de mesure, la distance de l'objet de mesure déterminée par une comparaison du rayonnement optique de mesure réfléchi ou dispersé par l'objet de mesure, transformé en signaux de mesure, est affichée.

9. Procédé selon la revendication 8, **caractérisé en ce que** le système photoélectrique de détection d'images prend de l'objet à mesurer au moins une image sans rayonnement optique et au moins une image avec rayonnement optique irradié, qu'une image de différence est déterminée dans l'unité d'évaluation à partir des images transformées électroniquement et qu'un marquage électronique est superposé à l'endroit du point de mesure détecté à l'image de l'objet de mesure qui est représentée sur le dispositif d'affichage électronique.

10. Procédé selon la revendication 9, **caractérisé en ce que** plusieurs images de l'objet de mesure qui se suivent rapidement dans le temps sont prises avec et sans rayonnement optique irradié et qu'il est fait la moyenne des images de différence déterminées à partir de celles-ci.

11. Procédé selon la revendication 9 ou 10, **caractérisé en ce que,** pendant la prise (les prises) de l'objet de mesure avec le rayonnement optique irradié la puissance de rayonnement est augmentée de manière synchrone, de préférence d'environ 2 fois à environ 20 fois.

12. Procédé selon l'une des revendications 8 à 11, **caractérisé en ce que** des images sont prises de l'objet de mesure avec un système monochrome de détection d'images, de préférence d'une appareil de prise de vues monochromes avec un composant à semi-conducteur photoélectrique, en particulier à base CMOS, le rayonnement détecté par le système de détection d'images étant guidé au moins temporairement avant par un filtre passe-bande avec une perméabilité dans la gamme de longueur d'ondes du rayonnement optique irradié.

13. Procédé selon l'une des revendications 8 à 11, **caractérisé en ce que** le rayonnement optique qui provient de l'objet de mesure est détecté avec un appareil photographique couleurs, de préférence seulement la partie d'images correspondant au spectre de longueur d'ondes du rayonnement optique irradié étant traité.

14. Procédé selon l'une des revendications 8 à 13, **caractérisé en ce que** le rayonnement optique qui provient de l'objet de mesure est détecté à l'aide d'un appareil photographique qui est placé dans un appareil séparé, de préférence dans un ordinateur de poche Palm ou un ordinateur portable qui est équipé d'une unité d'évaluation et à un dispositif d'affichage distinct et qui est couplé à l'appareil de mesure de distance.

15. Procédé selon l'une des revendications 8 à 13, **caractérisé en ce que** la détection d'images de l'objet de mesure est effectuée à l'aide d'un système photoélectrique de détection d'images qui est intégré à l'appareil de mesure de distance, l'évaluation des signaux détectés étant effectuée avec une unité d'évaluation placée dans l'appareil et la représentation étant effectuée sur un dispositif d'affichage électronique, par exemple un affichage ou équivalent qui est prévu sur l'appareil de mesure de distance.
